(19) Europäisches Patentamt
European Patent Office
Office européen des brevets

(11) EP 0 937 683 B1

(12) **FASCICULE DE BREVET EUROPEEN**

(45) Date de publication et mention de la délivrance du brevet:
**05.06.2002 Bulletin 2002/23**

(51) Int Cl.⁷: **C01B 39/48**, B01J 29/06, C10G 47/20

(21) Numéro de dépôt: **99400374.7**

(22) Date de dépôt: **16.02.1999**

(54) **Catalyseur comprenant une zéolithe NU-88, un élément du groupe VB et son utilisation en hydroconcersion de charges pétrolières hydrocarbonées**

Ein NU-88 Zeolit und ein Element der Gruppe VB haltender Katalysator und seine Verwendung für die Hydroumwandlung von Kohlenwasserstoffeneinsätzen

Catalyst comprising anNU-88 zeolite,an element of the group VB and its use for the hydroconversion of hydrocarbon feedstocks

(84) Etats contractants désignés:
**DE ES GB IT NL**

(30) Priorité: **20.02.1998 FR 9802102**

(43) Date de publication de la demande:
**25.08.1999 Bulletin 1999/34**

(73) Titulaire: **INSTITUT FRANCAIS DU PETROLE**
**92500 Rueil Malmaison (FR)**

(72) Inventeurs:
- **Benazzi, Eric**
  **78400 Chatou (FR)**
- **Marchal-George, Nathalie**
  **69230 Saint Genis Laval (FR)**
- **Diehl, Fabrice**
  **92500 Rueil Malmaison (FR)**
- **Kasztelan, Slavik**
  **92500 Rueil Malmaison (FR)**

(56) Documents cités:
**EP-A- 0 135 658**
**EP-A- 0 825 152**
**DE-A- 2 709 498**
**US-A- 4 676 958**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 937 683 B1

Printed by Jouve, 75001 PARIS (FR)

## Description

La présente invention concerne un catalyseur d'hydrocraquage de charges hydrocarbonées, ledit catalyseur comprenant au moins une zéolithe NU-88, un métal du groupe VB, de préférence le niobium, au moins une matrice amorphe ou mal cristallisée de type oxyde, éventuellement au moins un métal choisi parmi le groupe VIB et le groupe VIII de la classification périodique des éléments, de préférence le molybdène et le tungstène, le cobalt, le nickel et le fer. La matrice du catalyseur renferme éventuellement un élément choisi dans le groupe P, B, Si et éventuellement au moins un élément du groupe VIIA (groupe 17 des halogènes) tel que par exemple le fluor.

La présente invention concerne également les procédés de préparation du dit catalyseur, ainsi que son utilisation pour l'hydrocraquage de charges hydrocarbonées telles que les coupes pétrolières, les coupes issues du charbon contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer une excellente base pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant par exemple de la zéolithe Y de type structural FAU, ou les catalyseurs comportant par exemple une zéolithe de type bêta présentent quant à eux une activité catalytique supérieure à celle des silice-alumines amorphes, mais présentent des sélectivités en produits légers qui sont plus élevées.

D'autre part, des sulfures simples d'éléments du groupe VB ont été décrits en tant que constituants de catalyseurs d'hydroraffinage de charges hydrocarbonées, comme par exemple le trisulfure de niobium dans le brevet US-A-5.294.333. Des mélanges de sulfures simples comprenant au moins un élément du groupe VB et un élément du groupe VIB ont également été testés comme constituants de catalyseurs d'hydroraffinage de charges hydrocarbonées, comme par exemple dans le brevet US-A-4.910.181 ou le brevet US-A-5.275.994.

La demande de brevet EP-A-0 825 152 décrit la zéolithe NU-88, son procédé de préparation et ses applications catalytiques. L'invention décrite dans cette demande concerne également des compositions catalytiques comprenant la zéolithe NU-88, un liant, un support et éventuellement une autre zéolithe ou un métal, notamment le vanadium. Toutefois, les formulations catalytiques envisagées dans cette demande ne comprennent pas de niobium.

Les travaux de recherche effectués par le demandeur sur de nombreuses zéolithes et solides microporeux cristallisés et sur les phases actives hydrogénantes, l'ont conduit à découvrir que, de façon surprenante, un catalyseur d'hydrocraquage de charges hydrocarbonées caractérisé en ce qu'il comprend au moins une zéolithe NU-88, au moins une matrice minérale amorphe ou mal cristallisée, généralement poreuse telle que l'alumine, au moins un élément du groupe VB de la Classification périodique des éléments, tels que le tantale, le niobium ou le vanadium, de préférence le niobium, et éventuellement au moins un élément du groupe VIB de ladite Classification, tels que le chrome, le molybdène ou le tungstène, de préférence le molybdène ou le tungstène, de façon encore plus préférée le molybdène, éventuellement un élément du groupe VIII, c'est-à-dire un élément choisi dans le groupe constitué par : Fe, Ru, Os, Co, Rh, Ir, Ni, Pd, Pt, de préférence le fer, le cobalt ou nickel, éventuellement un élément choisi dans le groupe formé par P, B et Si, éventuellement un élément du groupe VIIA, et de préférence le fluor permet d'obtenir des activités, c'est à dire un niveau de conversion plus élevé, que les catalyseurs connus dans l'art antérieur.

Ledit catalyseur présente une activité en hydrocraquage plus importante que celles des formules catalytiques à base d'élément du groupe VIB connues de l'art antérieur. Sans vouloir être lié par une quelconque théorie, il semble que cette activité particulièrement élevée des catalyseurs de la présente invention est due aux propriétés particulières du sulfure de l'élément du groupe VB. La présence d'un tel sulfure ayant des propriétés acides permet non seulement une amélioration des propriétés craquantes mais de plus une amélioration des propriétés hydrogénante, hydrodésulfurante, hydrodéazotante par rapport au sulfure de l'élément du groupe VIB et en particulier du sulfure de molybdène ou de tungstène utilisés habituellement pour la fonction hydrogénante.

Le catalyseur de la présente invention renferme généralement en % poids par rapport à la masse totale du catalyseur :

- 0,1 à 99,8%, de préférence de 0,1 à 90% et de manière encore plus préférée de 0,1 à 80% et de manière très préférée de 0,1 à 70% d'une zéolithe NU-88,
- 0,1 à 60%, de préférence de 0,1 à 50% et de manière encore plus préférée de 0,1 à 40% d'au moins un métal choisi dans le groupe VB,
- 0,1 à 99%, de préférence de 1 à 99 % d'une matrice minérale poreuse amorphe ou mal cristallisée de type oxyde

le dit catalyseur étant caractérisé en ce qu'il renferme éventuellement :

- 0 à 60%, de préférence de 0,1 à 50% et de manière encore plus préférée de 0,1 à 40% d'au moins un métal choisi parmi les éléments du groupe VIII et du groupe VIB.
- 0 à 20%, de préférence de 0,1 à 15% et de manière encore plus préférée de 0,1 à 10% d'au moins un élément promoteur choisi dans le groupe constitué par le silicium, le bore et le phosphore, non compris le silicium éventuellement contenu dans la charpente de la zéolithe et éventuellement encore,
- à 20%, de préférence de 0.1 à 15% et de manière encore plus préférée de 0,1 à 10% d'au moins un élément choisi dans le groupe VIIA, de préférence le fluor.

Lorsqu'il est présent l'élément promoteur silicium est sous forme amorphe et localisé principalement sur la matrice.

Les métaux du groupe VB, VIB et du groupe VIII du catalyseur de la présente invention peuvent être présent en totalité ou partiellement sous la forme métallique et/ou oxyde et/ou sulfure.

Les catalyseurs selon l'invention peuvent être préparés selon toutes les méthodes bien connues de l'homme du métier.

Un procédé préféré de préparation du catalyseur selon la présente invention comprend les étapes suivantes :

a) on sèche et on pèse un solide ci-après dénommé le précurseur, renfermant au moins les composés suivants : au moins une matrice, au moins une zéolithe NU-88, éventuellement au moins un élément choisi par les éléments du groupe VIB et du groupe VIII, éventuellement au moins un élément choisi dans le groupe phosphore, bore et silicium, éventuellement au moins un élément du groupe VIIA, le tout étant de préférence mis en forme,

b) le solide sec obtenu à l'étape a) est calciné à une température d'au moins 150°C.

c) on imprègne le solide précurseur défini à l'étape b), par une solution contenant un élément du groupe VB, de préférence le niobium,

d) on laisse reposer le solide humide sous une atmosphère humide à une température comprise entre 10 et 120°C,

e) on sèche le solide humide obtenu à l'étape d) à une température comprise entre 60 et 150°C,

La préparation du précurseur de l'étape a) ci-dessus peut être réalisée selon toutes les méthodes classiques de l'homme du métier. Selon un autre procédé de préparation préféré, le précurseur est obtenu par mélange d'au moins une matrice et d'au moins une zéolithe NU-88 puis mise en forme, séchage et calcination. Les éléments des groupes VIB, VIII, et ceux du choisi parmi phosphore, le bore, le silicium et les éléments du groupe VIIA, sont alors éventuellement introduits par toutes méthode connue de l'homme du métier, à l'une quelconque des étapes a) à e), avant ou après la mise en forme et avant ou après la calcination du précurseur ou du catalyseur.

La mise en forme peut être réalisée par exemple par extrusion, par pastillage, par la méthode de la goutte d'huile (oil-drop), par granulation au plateau tournant ou par toute autre méthode bien connue de l'homme du métier. Au moins une calcination peut être effectuée après l'une quelconque des étapes de la préparation, elle est habituellement effectuée sous air à une température d'au moins 150°C, de préférence au moins 300°C. Ainsi, le produit obtenu à l'issue de l'étape a) et/ou de l'étape e) et/ou éventuellement après introduction du ou des éléments des groupes VIB, VIII, ceux choisis parmi le phosphore, le bore, le silicium, et les éléments du groupe VIIA, est alors éventuellement calciné sous air, usuellement à une température d'au moins 150°C, de préférence au moins 250°C, couramment d'environ 350 à 1000°C.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à malaxer au moins une zéolithe NU-88, dans un gel humide d'alumine pendant quelques dizaines de minutes, puis à passer la pâte ainsi obtenue à travers une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage d'au moins une zéolithe NU-88, avec au moins un gel d'oxyde choisi comme matrice. Elle peut également être introduite par une ou plusieurs opérations d'échange ionique sur le support calciné constitué d'au moins une zéolithe NU-88, dispersée dans au moins une matrice, à l'aide de solutions contenant les sels précurseurs des métaux choisis lorsque ceux-ci appartiennent au groupe VIII. Elle peut aussi être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite par une ou plusieurs opérations d'imprégnation du support calciné constitué d'au moins une zéolithe NU-88 et d'au moins une matrice, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le bore et/ou le silicium et/ou le phosphore et éventuellement l'élément choisi dans le groupe VIIA, de préférence le fluor, peuvent être introduits dans le catalyseur à tout niveau de la préparation et selon toute technique connu de l'homme du métier.

Une méthode préférée selon l'invention consiste à déposer le ou les éléments promoteurs choisis, par exemple le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on rempli le volume des pores du précurseur par la solution contenant par exemple le bore. Dans le cas où l'on dépose par exemple également du silicium, on utilisera par exemple une solution d'un composé du silicium de type silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-molybdène supporté sur alumine et zéolithe NU-88, il est possible d'imprégner ce précurseur par de la solution aqueuse de biborate d'ammonium et de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

L'élément promoteur choisi dans le groupe formé par le silicium, le bore et le phosphore et l'élément choisi parmi les ions halogénures du groupe VIIA, peuvent être introduits par une ou plusieurs opérations d'imprégnation avec excès de solution sur le précurseur calciné.

Ainsi, par exemple, il est possible d'imprégner le précurseur par une solution aqueuse de biborate d'ammonium ou de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

D'autres séquences d'imprégnation peuvent être mises en oeuvre pour obtenir le catalyseur selon l'invention.

Il est par exemple possible d'imprégner le précurseur avec une solution contenant un des éléments promoteurs (P, B, Si), de sécher, de calciner puis d'imprégner le solide obtenu avec la solution contenant un autre élément promoteur, de sécher, de calciner. Il est aussi possible d'imprégner le précurseur avec une solution contenant deux des éléments promoteurs, de sécher, de calciner puis d'imprégner le solide obtenu avec la solution contenant un autre élément promoteur, de sécher, et de procéder à une calcination finale. On dépose ensuite l'élément du groupe VB selon toute méthode connue de l'homme de métier.

Le catalyseur de la présente invention peut éventuellement renfermer un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel et le ruthénium. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Dans le cas où les éléments sont introduits en plusieurs imprégnations des sels précurseurs correspondants, une étape de calcination intermédiaire du catalyseur devra être effectuée à une température, par exemple et préférentiellement, comprise entre 250 et 600 °C.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

La sulfuration des solides (catalyseurs) contenant au moins un élément du groupe VB sous forme oxyde se révèle être très difficile par la plupart des méthodes classiques de sulfuration connues de l'homme du métier. En effet les catalyseurs contenant au moins un élément du groupe VB supporté sur une matrice du type alumine sont connus pour être très difficiles à sulfurer une fois que l'association élément du groupe VB-alumine a été calcinée à une température supérieure à 200°C.

La sulfuration peut se faire par toute méthode connue de l'homme du métier et à toute étape de la préparation. La méthode préférée selon l'invention consiste à chauffer le catalyseur non calciné sous flux d'un mélange hydrogène-hydrogène sulfuré ou sous flux d'un mélange azote-hydrogène sulfuré ou encore sous hydrogène sulfuré pur à une température comprise entre 150 et 800°C, de préférence entre 250 et 600°C, généralement dans une zone réactionnelle à lit traversé. Ainsi, par exemple dans le cas préféré où le métal du groupe VB est le niobium et où le métal du groupe VIB est le molybdène, il est possible d'imprégner le support, par exemple le mélange alumine-NU-88, par de l'heptamolybdate d'ammonium, de procéder à un séchage à 80°C, puis d'imprégner par de l'oxalate de niobium, de procéder à un séchage à 80°C, et de procéder à une sulfuration par exemple et de façon préférée par $H_2S$ en lit traversé, par exemple à 500°C pendant 10 heures.

La zéolithe NU-88 utilisée dans la présente invention est caractérisée par :

-i) une composition chimique exprimée sur une base anhydre, en termes de rapports molaires d'oxydes, par la formule :

$$100\ XO_2,\ m\ Y_2O_3,\ p\ R_{2/n}O,$$

où m est égal ou inférieur à 10, p est égal ou inférieur à 20, R représente un ou plusieurs cations de valence n, X est le silicium et/ou le germanium, de préférence le silicium, Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, de préférence Y est l'aluminium, et

-ii) le fait qu'elle présente, sous forme brute de synthèse, un diagramme de diffraction X comportant les résultats présentés dans le tableau 1.

Tableau 1 :

| Tableau de diffraction des rayons X de la zéolithe NU-88 (brute de synthèse) | |
|---|---|
| $d_{hkl}$ ($10^{-10}$m) | $I/I_{max}$ |
| 12,1±0,35<br>11,0±0,30 | F ou TF (1)<br>F (1) |
| 9,88±0,25<br>6,17±0,15 | m (1)<br>f |
| 3,97±0,09<br>3,90±0,08 | TF (2)<br>TF (2) |
| 3,80±0,08<br>3,66±0,07 | f (2)<br>tf |
| 3,52±0,07<br>3,27±0,07 | tf<br>tf |
| 3,09±0,06<br>2,91±0,06 | f<br>f |
| 2,68±0,06<br>2,49±0,05 | tf<br>tf |
| 2,20±0,05<br>2,059±0,05 | tf<br>f |
| 1,729±0,04 | tf |

(1) Ces pics ne sont pas résolus et font partie d'un même massif.
(2) Ces pics ne sont pas résolus et font partie du même massif.

L'invention concerne aussi la zéolithe NU-88 sous forme hydrogène, désignée par H-NU-88, produite par calcination et/ou échange d'ion comme décrit ci-après. La zéolithe H-NU-88 a un diagramme de diffraction X comportant les résultats présentés dans le tableau 2.

Tableau 2 :

| Tableau de diffraction des rayons X de la zéolithe NU-88 (forme hydrogène) | |
|---|---|
| $d_{hkl}$($10^{-10}$m) | $I/I_{max}$ |
| 12,1±0,35<br>11,0±0,30 | TF(1)<br>F ou TF (1) |
| 9,92±0,25<br>8,83±0,20 | f ou m (1)<br>tf |
| 6,17±0,15<br>3,99±0,10 | f<br>F ou TF (2) |
| 3,91±0,08<br>3,79±0,08 | TF (2)<br>f ou m (2) |
| 3,67±0,07<br>3,52±0,07 | tf<br>tf |
| 3,09±0,06<br>2,90±0,06 | f<br>f |
| 2,48±0,05 | f |

(1) Ces pics ne sont pas résolus et font partie d'un même massif.
(2) Ces pics ne sont pas résolus et font partie du même massif.

Tableau 2 : (suite)

| Tableau de diffraction des rayons X de la zéolithe NU-88 (forme hydrogène) | |
|---|---|
| $d_{hkl}(10^{-10}m)$ | $I/I_{max}$ |
| 2,065±0,05 | f |
| 1,885±0,04<br>1,733±0,04 | tf<br>tf |

Ces diagrammes sont obtenus à l'aide d'un diffractomètre en utilisant la méthode classique des poudres avec le rayonnement Ka du cuivre Cu K alpha. A partir de la position des pics de diffraction représentée par l'angle 2q, on calcule, par la relation de Bragg, les équidistances réticulaires $d_{hkl}$ caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X, et alors :

très faible (tf) signifie inférieure à 10,
faible (f) signifie inférieure à 20,
moyenne (m) signifie comprise entre 20 et 40,
forte (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements, ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

On estime que la zéolithe Nu-88 possède une nouvelle structure de base ou topologie qui est caractérisée par son diagramme de diffraction X. La zéolithe NU-88 sous sa "forme brute de synthèse" possède sensiblement les caractéristiques obtenues par diffraction X, présentées dans le tableau 1, et se distingue ainsi des zéolithes connues. L'objet de l'invention comprend aussi toute zéolithe de même type structural que celui de la zéolithe NU-88.

Les tableaux 1 et 2 et les diffractogrammes des figures 1 et 2 sont relativement peu habituels pour des structures zéolithiques. Par conséquent, ces données semblent indiquer que la zéolithe NU-88 présente une structure à défaut.

Dans le cadre de la définition de la composition chimique donnée ci-dessus, m est généralement compris entre 0,1 et 10, de préférence entre 0,2 et 9, et de façon encore plus préférée entre 0,6 et 8; il apparaît que la zéolithe NU-88 s'obtient généralement le plus aisément sous une forme très pure lorsque m est compris entre 0,6 et 8.

Cette définition englobe également la zéolithe NU-88 sous sa "forme brute de synthèse", ainsi que des formes obtenues par déshydratation et/ou calcination et/ou échange d'ions. L'expression "sous sa forme brute de synthèse" désigne le produit obtenu par synthèse et par lavage avec ou sans séchage ou déshydratation. Sous sa "forme brute de synthèse", la zéolithe NU-88 peut comporter un cation de métal M, qui est un alcalin , notamment du sodium, et/ou de l'ammonium, et elle peut comporter des cations organiques azotés tels que ceux décrits ci-après ou leurs produits de décomposition, ou encore leurs précurseurs. Ces cations organiques azotés sont désignés ici par la lettre Q, qui inclut aussi les produits de décomposition et les précurseurs desdits cations organiques azotés.
Ainsi, la zéolithe NU-88, sous sa forme "brute de synthèse" (non calcinée), est caractérisée par :

i) une composition chimique exprimée sur une base anhydre, en termes de rapports molaires d'oxydes :

100 $XO_2$ : inférieur ou égal à 10 $Y_2O_3$ : inférieur ou égal à 10 Q : inférieur ou égal à 10 $M_2O$,

où X est le silicium et/ou le germanium,

Y est choisi dans le groupe formé par les éléments suivants : l'aluminium, le fer, le gallium, le bore, le titane, le vanadium, le zirconium, le molybdène, l'arsenic, l'antimoine, le chrome et le manganèse,

M est au moins un cation de métal alcalin (groupe IA de la Classification Périodique des Eléments) et/ou l'ammonium, et

Q est au moins un cation organique azoté ou un précurseur de cation organique azoté ou un produit de décomposition de cation organique azoté.

ii) le fait qu'elle présente, sous forme brute de synthèse, un diagramme de diffraction X comportant les résultats présentés dans le tableau 1

Les compositions indiquées ci-dessus pour la zéolithe NU-88 sont données sur une base anhydre, bien que la zéolithe NU-88 sous sa "forme brute de synthèse" et les formes activées de la zéolithe NU-88, c'est-à-dire résultant d'une calcination et/ou d'un échange d'ions, puissent contenir de l'eau. La teneur molaire en $H_2O$ de telles formes, y compris la zéolithe NU-88 sous sa "forme brute de synthèse", varie selon les conditions dans lesquelles elles ont été préparées et conservées après synthèse ou activation. Les quantités molaires d'eau contenue dans ces formes sont typiquement comprises entre 0 et 100 % $XO_2$.

Les formes calcinées de la zéolithe NU-88 ne contiennent pas de composé organique azoté, ou en quantité moindre que la "forme brute de synthèse", dans la mesure où la substance organique est éliminée en majeure partie, généralement par un traitement thermique consistant à brûler la substance organique en présence d'air, l'ion hydrogène ($H^+$) formant alors l'autre cation.

Ainsi la zéolithe Nu-88, sous sa forme hydrogène, est caractérisée par :

i) une composition chimique suivante exprimée sur une base anhydre, en termes de rapports molaires d'oxydes, par la formule :

$100XO_2$ : inférieur ou égal à 10 $Y_2O_3$ : inférieur ou égal à 10 $M_2O$,
où
X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et
M est au moins un cation de métal alcalin (groupe IA de la Classification Périodique des Eléments) et/ou l'ammonium et/ou l'hydrogène,

ii) le fait qu'elle présente, sous forme hydrogène, un diagramme de diffraction X comportant les résultats présentés dans le tableau 2.

Parmi les formes de zéolithe NU-88 obtenues par échange d'ions, la forme ammonium ($NH_4^+$) est importante car elle peut être facilement convertie sous la forme hydrogène par calcination. La forme hydrogène et les formes contenant des métaux introduits par échange d'ions sont décrites ci-dessous. Dans certains cas, le fait de soumettre la zéolithe selon l'invention à l'action d'un acide peut donner lieu à l'élimination partielle ou totale d'un élément de base tel que l'aluminium, ainsi que la génération de forme hydrogène. Ceci peut constituer un moyen de modifier la composition de la substance de la zéolithe après qu'elle a été synthétisée.

La zéolithe NU-88 sous forme hydrogène (forme acide), appelée H-NU-88, est produite par calcination et par échange d'ions comme décrit ci-après.

La zéolithe NU-88 au moins en partie sous forme $H^+$ (telle que définie ci-dessus) ou $NH_4^+$ ou métallique, ledit métal étant choisi dans le groupe formé par les groupes IA, IB, IIA, IIB, IIIA, IIIB (y compris les terres rares), VIII, Sn, Pb et Si, de préférence au moins en partie sous forme $H^+$ ou au moins en partie sous forme métallique, peut aussi être utilisée. Une telle zéolithe présente généralement un diagramme de diffraction X comportant les résultats présentés dans le tableau 1.

On emploiera de préférence la zéolithe NU-88 au moins en partie sous forme acide (et de préférence en totalité sous forme H) ou partiellement échangée avec des cations métalliques, par exemple des cations des métaux alcalino-terreux.

Les zéolithes NU-88 qui entrent dans la composition selon l'invention sont utilisées avec les teneurs en silicium et aluminium obtenues à la synthèse.

Lorsque le support comprend au moins une matrice, la matrice minérale poreuse, habituellement amorphe ou mal cristallisée, est en général constituée d'au moins un oxyde réfractaire sous forme amorphe ou mal cristallisée. Ladite matrice est préférentiellement choisie dans le groupe formé par l'alumine, la silice, la silice-alumine, ou un mélange de aux moins deux des oxydes cités ci dessus. On peut choisir également les aluminates. On préfère utiliser des matrices contenant de l'alumine, sous toutes ces formes connues de l'homme du métier, par exemple l'alumine gamma.

Les sources d'élément du groupe VB qui peuvent être utilisées sont bien connues de l'homme du métier. Par exemple, parmi les sources de niobium, on peut utiliser les oxydes, tel que le pentaoxyde de diniobium $Nb_2O_5$, l'acide

niobique $Nb_2O_5.H_2O$, les hydroxydes de niobium et les polyoxoniobates, les alkoxydes de niobium de formule Nb $(OR_1)_3$ où $R_1$ est un radical alkyle, l'oxalate de niobium $NbO(HC_2O_4)_5$, le niobate d'ammonium. On utilise de préférence l'oxalate de niobium ou le niobate d'ammonium.

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si $(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

Les catalyseurs obtenus par la présente invention sont généralement mis en forme. Les grains alors obtenus présentent différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 $m^2/g$, un volume poreux mesuré par porosimétrie au mercure compris entre 0,2 et 1,5 $cm^3/g$ et une distribution en taille de pores pouvant être monomodale, bimodale ou polymodale.

Les catalyseurs obtenus par la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes

lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. La quantité d'hydrogène est au minimum de 50 litres d'hydrogène par litre de charge et souvent compris entre 80 et 5000 litres d'hydrogène par litre de charge. La vitesse volumique horaire est comprise en général entre 0,1 et 20 volume de charge par volume de catalyseur et par heure ($h^{-1}$).

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de charges hydrocarbonnées, en particulier des coupes de type distillats sous vide, plus particulièrement par exemple, les coupes à teneur en soufre supérieure à 0,1 % poids et à teneur en azote supérieure à 10 ppm.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C et de préférence comprise entre 300°C et 480°C, et souvent comprise entre 350°C et 450°C. La pression est en général supérieure à 2MPa et de préférence supérieure à 3MPa, et inférieure à 12 MPa, de préférence inférieure à 10 MPa. La quantité d'hydrogène est au minimum de 100 litres d'hydrogène par litre de charge et souvent comprise entre 200 et 3000 litres d'hydrogène par litre de charge. La vitesse volumique horaire est comprise en général entre 0,1 et $10h^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est une matrice minérale poreuse amorphe ou mal cristallisée de type oxyde. On peut citer à titre d'exemple non limitatif les alumines, les silices, les silice-alumine. On peut choisir également les aluminates. On préfère utiliser des matrices contenant de l'alumine, sous toutes ces formes connues de l'homme du métier, et de manière encore plus préférée les alumines, par exemple l'alumine gamma. La fonction d'hydrotraitement est assurée par au moins un métal ou composé de métal du groupe VIII tels que par exemple le nickel et le cobalt. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière très préférée entre 7 et 30 % en poids et le rapport pondéral exprimé en oxyde métallique en métal (ou métaux) du groupe VIB sur métal (ou métaux) du groupe VIII est préférentiellement compris entre 1,25 et 20 et de manière très préférée entre 2 et 10. De plus, ce catalyseur peut contenir du phosphore. La teneur en phosphore, exprimée en concentration en pentaoxyde de diphosphore $P_2O_5$ sera préférentiellement d'au plus 15%, de manière plus préférée comprise entre 0,1 et 15 % en poids et de manière très préférée comprise entre 0,15 et 10% en poids. Il peut également contenir du bore dans un rapport B/P = 1,05 - 2 (atomique), la somme des teneurs en B et P exprimée en oxydes étant préférentiellement comprise entre 5 et 15 % poids.

La première étape se déroule généralement à une température de 350-460°C, de préférence 360-450°C, une pression d'au moins 2MPa ; et de préférence au moins 3 MPa, une vitesse volumique horaire de $0,1\text{-}5h^{-1}$ et de préférence $0.2\text{-}2h^{-1}$ et avec une quantité d'hydrogène d'au moins 100 litres d'hydrogène par litre de charge, et de préférence 260-3000 litres d'hydrogène par litre de charge.

Pour l'étape de conversion avec le catalyseur selon l'invention (ou seconde étape d'hydrocraquage), les températures sont en général supérieures ou égales à 230°C et souvent comprises entre 300°C et 480°C, de préférence entre 330°C et 450°C. La pression est en général d'au moins 2MPa et de préférence d'au moins 3MPa, et inférieure

à 12MPa, de préférence inférieure à 10MPa. La quantité d'hydrogène est au minimum de 100 litres d'hydrogène par litre de charge et souvent comprise entre 200 et 3000 litres d'hydrogène par litre de charge. La vitesse volumique horaire est comprise en général entre 0,15 et $10h^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation, le catalyseur de la présente invention peut être employé pour l'hydrocraquage dans des conditions de pression d'hydrogène élevées d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40 % en poids et de préférence entre 7 et 30 % en poids et le rapport pondéral exprimé en oxyde métallique en métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0,1 et 15 % en poids et de préférence comprise entre 0,15 et 10% en poids. Il peut également contenir du bore dans un rapport B/P = 1,02-2 (atomique), la somme des teneurs en B et P exprimée en oxydes étant de 5-15 % poids.

La première étape se déroule généralement à une température de 350-460°C, de préférence 360-450°C, une pression d'au moins 2MPa, et de préférence d'au moins 3MPa, une vitesse volumique horaire de $0{,}1\text{-}5h^{-1}$ et de préférence $0{,}2\text{-}2h^{-1}$ et avec une quantité d'hydrogène d'au moins 100 litres d'hydrogène par litre de charge, et de préférence 260-3000 litres d'hydrogène par litre de charge.

Pour l'étape de conversion avec le catalyseur selon l'invention (ou seconde étape), les températures sont en général supérieures ou égales à 230°C et souvent comprises entre 300°C et 480°C, et de manière préférée entre 300°C et 440°C. La pression est en général supérieure à 5MPa et de préférence supérieure à 7MPa. La quantité d'hydrogène est au minimum de 100 litres d'hydrogène par litre de charge et souvent comprise entre 200 et 3000 litres d'hydrogène par litre de charge. La vitesse volumique horaire est comprise en général entre 0,15 et $10h^{-1}$.

Dans ces conditions, les catalyseurs de la présente invention présentent une meilleure activité en conversion que les catalyseurs commerciaux, même pour des teneurs en zéolithe considérablement plus faibles que celles des catalyseurs commerciaux.

Les exemples suivants illustrent la présente invention sans toutefois en limiter la portée.

Exemple 1: Préparation d'un support de catalyseur d'hydrocraquage contenant une zéolithe NU-88

La zéolithe NU-88 est synthétisée à partir de l'hexane-1,6-bis (méthyl-pyrrolidinium) bromure (HexPyrr). La structure de l'hexane-1,6-bis(méthylpyrrolidinium) bromure (HexPyrr) est la suivante :

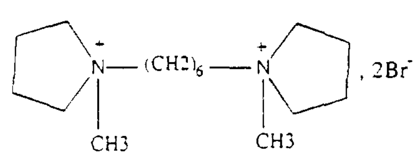

Un mélange réactionnel de composition molaire 60 $SiO_2$ : 2 $Al_2O_3$ : 10 $Na_2O$ : 10 HexPyrr : 3000 $H_2O$ a été préparé à partir de :

- 48,07 g de "CAB-O-SIL" (BDH Ltd)
- 12,303 g de solution SoAl 235 (Laroche) (composition en % poids : 22,10 % $Al_2O_3$; 20,40 % $Na_2O$; 57,50 % $H_2O$)
- 7,4 g de pastilles d'hydroxyde de sodium
- 57,2 g de HexPyrr (composition en % poids : 96,50 % HexPyrr; 3,50 % $H_2O$)

- 709 g d'eau.

Le mélange a été préparé selon le mode opératoire suivant :

A - solution contenant l'hydroxyde de sodium et de l'aluminate de sodium dans de l'eau (approximativement 200 g)
B - solution contenant l'HexPyrr dans de l'eau (approximativement 150 g)
C - dispersion du CAB-O-SIL dans l'eau restante.

La solution A a été ajoutée à la dispersion C sous agitation; la solution B a ensuite été ajoutée. L'agitation a été poursuivie jusqu'à obtention d'un gel homogène. Le mélange obtenu a ensuite été transféré dans un autoclave en acier inoxydable d'une capacité de 1 litre. Le mélange a été porté à une température de 160°C. Cette température a été maintenue pendant toute la durée de la réaction. De plus, le mélange a été maintenu sous agitation à l'aide d'un agitateur à palettes inclinées.

Des échantillons du mélange réactionnel ont été régulièrement prélevés et le déroulement de la réaction a été surveillé par l'intermédiaire du pH. Après 13 jours à 160°C, la température du mélange réactionnel a été brusquement abaissée à la température ambiante et le produit a été évacué. La substance a ensuite été filtrée; le produit solide obtenu a été lavé à l'eau déminéralisée et séché pendant plusieurs heures à 110°C.

L'analyse du Si, Al et Na dans le produit a été effectuée par spectroscopie d'émission atomique. On a trouvé la composition molaire suivante :

$$100\ SiO_2 : 4,82\ Al_2O_3 : 0,337\ Na_2O.$$

Le produit solide séché a été analysé par diffraction X de poudres et identifié comme étant de la zéolithe NU-88. Le diagramme obtenu est en conformité avec les résultats présentés au tableau 1. Le diffractogramme est donné dans la figure 1 [en ordonnée l'intensité I (unité arbitraire) et en abscisse 2θ (CuK alpha)].

Le produit obtenu précédemment est calcinée sous azote pendant 24 heures à 550°C; cette étape a été immédiatement suivie d'une seconde calcination sous air à 450°C, pendant 24 heures.

La substance obtenue a ensuite été mise en contact pendant 2 heures à température ambiante avec une solution aqueuse à 1 mole de chlorure d'ammonium en utilisant 50 ml de solution par gramme de produit calciné solide. La substance a ensuite été filtrée, lavée à l'eau permutée et séchée à 110°C. Ce traitement a été répété 3 fois. La substance a ensuite été calcinée sous air pendant 24 heures, à 550°C. Le produit calciné a été analysé en diffraction des rayons X. Le diffractogramme obtenu est donné figure 2 [en abscisse 2q (Cu K alpha) et en ordonnée l'intensité I (unité arbitraire)]. Le diagramme de diffraction X est en accord avec le tableau 2.

L'analyse du Si, Al et Na dans le produit, effectuée par spectroscopie d'émission atomique, a donné la composition molaire suivante :

$$100\ SiO_2 : 4,55\ Al_2O_3 : 0,009\ Na_2O$$

Un support catalyseur d'hydrocraquage contenant la zéolithe NU-88 fabriqué ci dessus a été obtenu de la facon suivante. On mélange 19.4 g de la zéolithe NU-88 à 80,6 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air.

<u>Exemple 2: Préparation de catalyseurs d'hydrocraquage contenant une zéolithe NU-88 (non conforme à l'invention)</u>

Les extrudés de support contenant une zéolithe NU-88 préparé dans l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ10 obtenus sont indiquées dans le tableau 2.

Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur CZ10P obtenus sont indiquées dans le tableau 2.

Nous avons ensuite imprégné l'échantillon de catalyseur CZ10P par une solution aqueuse renfermant du

biborate d'ammonium et l'émulsion de silicone Rhodorsil EP1, et obtenu le catalyseur CZ10PBSi. Les teneurs finales en oxydes des catalyseurs CZ10 sont indiquées dans le tableau 2.

Tableau 2 :

| Caractéristiques des catalyseurs CZ10 | | | | | | |
|---|---|---|---|---|---|---|
| Catalyseur | CZ10 | CZ10 Nb | CZ10 P | CZ10 NbP | CZ10 PBSi | CZ10 NbPBSi |
| $MoO_3$ (% pds) | 13,8 | 12,9 | 13,3 | 12,3 | 12,8 | 11,9 |
| $Nb_2O_5$ (% pds) | 0 | 6,4 | 0 | 6,6 | 0 | 6,6 |
| NiO (% pds) | 3,1 | 2,9 | 3,0 | 2,8 | 2,9 | 2,7 |
| $P_2O_5$ (% pds) | 0 | 0 | 4,65 | 4,3 | 4,5 | 4,2 |
| $B_2O_3$ (% pds) | 0 | 0 | 0 | 0 | 1,5 | 1,4 |
| $SiO_2$ (% pds) | 14,8 | 13,8 | 14,1 | 13,1 | 15,3 | 14,3 |
| Complément à 100% composé majoritairement de $Al_2O_3$ (% pds) | 68,3 | 63,8 | 64,95 | 60,7 | 63,0 | 58,8 |

L'analyse, par microsonde électronique, des catalyseurs CZ10PBSi et CZ10NbPBSi (tableau 2) montre que le silicium ajouté au catalyseur selon l'invention est principalement localisé sur la matrice et se trouve sous forme de silice amorphe.

<u>Exemple 3 : Préparation de catalyseurs d'hydrocraquage contenant une zéolithe NU-88 et du niobium (conforme à l'invention)</u>

Les catalyseurs de l'exemple 3 ci-dessus sont imprégnés par une solution aqueuse d'oxalate de niobium Nb $(HC_2O_4)_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Ceci permet de déposer environ 5% poids de Nb sur le catalyseur. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution.

Les catalyseurs de l'exemple 3 ci dessus sont imprégnés par la méthode dite avec excès de solution. Les 1330 ml de solution sont mis en contact avec 380 g de catalyseur. A bout de deux heures on récupère les extrudés. Ceux-ci sont ensuite séchés une nuit à 120°C sous un courant d'air sec. Les teneurs finales en oxydes des catalyseurs CZ10Nb, CZ10NbP et CZ10NbPBSi ainsi obtenus sont indiquées dans le tableau 2.

<u>Exemple 4 : Comparaison des catalyseurs en hydrocraquage d'un gazole sous vide à conversion partielle.</u>

Les catalyseurs dont les préparations sont décrites dans les exemples 1 à 3 sont utilisés dans les conditions de l'hydrocraquage à pression modérée sur une charge pétrolière dont les principales caractéristiques sont les suivantes :

| | |
|---|---|
| Densité (20/4)<br>Soufre (% poids)<br>Azote (ppm poids) | 0,921<br>2,46<br>1130 |
| Distillation simulée | |
| point initial<br>point 10 %<br>point 50 %<br>point 90 %<br>point final<br>point d'écoulement | 365°C<br>430°C<br>472°C<br>504°C<br>539°C<br>+ 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première

étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un des catalyseurs d'hydrocraquage préparés dans les exemples 1 à 3. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 $cm^3$ |
| Catalyseur d'hydrocraquage | 40 $cm^3$ |
| Température | 400°C |
| Débit d'hydrogène | 20 l/h |
| Débit de charge | 40 $cm^3/h$ |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{moins}} \text{ de l'effluent}$$

380°$C^{\text{moins}}$ représentant la fraction distillée à une température inférieure ou égale à 380°C.

La sélectivité brute SB en distillats moyens est prise égale à :

$$SB = 100 * \text{poids de la fraction } (150°C\text{-}380°C)/\text{poids de la fraction } 380°C^{\text{moins}} \text{ de l'effluent}$$

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau suivant, nous avons reporté la conversion brute CB à 400°C, la sélectivité brute SB, la conversion en hydrodésulfuration HDS et la conversion en hydrodéazotation HDN pour les catalyseurs.

Tableau 3 :

| Activités catalytiques des catalyseurs à base de NU-88 en hydrocraquage partiel à 400°C | | | | | |
|---|---|---|---|---|---|
| | | CB (%pds) | SB | HDS (%) | HDN (%) |
| CZ10 | NiMo/NU-88 | 49,7 | 59,2 | 98,7 | 95,1 |
| CZ10Nb | NiMoNb/NU-88 | 50,2 | 59,8 | 98,8 | 96,7 |
| CZ10P | NiMoP/NU-88 | 49,7 | 60,3 | 99,3 | 96,2 |
| CZ10NbP | NiMoNbP/NU-88 | 50,6 | 60,1 | 99,45 | 97,1 |

Tableau 3 : (suite)

| Activités catalytiques des catalyseurs à base de NU-88 en hydrocraquage partiel à 400°C | | | | | |
|---|---|---|---|---|---|
| | | CB (%pds) | SB | HDS (%) | HDN (%) |
| CZ10PBSi | NiMoPBSi/NU-88 | 50,9 | 59,4 | 99,5 | 98,4 |
| CZ10NbPBSi | NiMoNbPBSi/NU-88 | 51,6 | 60,2 | 99,7 | 98,8 |

Les résultats du tableau 3 montrent que l'ajout de niobium aux catalyseurs NiMo, NiMoP, NiMoPBSi supporté sur les supports contenant de l'alumine et une zéolithe NU-88 apporte une amélioration des performances du catalyseur en conversion quelque soit la zéolithe. En effet, les catalyseurs contenant de la zéolithe NU-88 selon l'invention présentent une activité plus grande, c'est à dire des conversions plus élevées pour une même température de réaction de 400°C, que les catalyseurs non conforme (CZ10, CZ10P et CZ10PBSi). Les catalyseurs selon l'invention contenant du niobium sont donc particulièrement intéressants pour l'hydrocraquage partiel de charge de type distillats sous vide contenant de l'azote à une pression d'hydrogène modérée.

Exemple 5 : Comparaison des catalyseurs à base de Nu-88 en hydrocraquage d'un gazole sous vide à haute conversion

Les catalyseurs contenant de la zéolithe NU-88 et du niobium dont les préparations sont décrites aux exemples 1 à 3 sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée | |
| point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.

On ajoute à la charge 0,6% poids d'aniline et 2% poids de diméthyl-disulfure afin de simuler les pressions partielles d'$H_2S$ et d'$NH_3$ dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320 °C. Toute méthode de sulfuration in-situ ou ex-situ peut être employée. Une fois la sulfuration réalisée, la charge décrite ci-dessus peut être transformée. Les conditions opératoires de l'unité de test sont les suivantes :

| | |
|---|---|
| Pression totale | 9 Mpa |
| Catalyseur | 80 $cm^3$ |
| Température | 360-420°C |
| Débit d'hydrogène | 80 l/h |
| Débit de charge | 80 $cm^3$/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{ moins}} \text{ de l'effluent}$$

La sélectivité brute SB en distillat moyen est prise égale à :

$$SB = 100\text{*poids de la fraction (150°C-380°C)/poids de la fraction 380°C}^{\text{moins}} \text{ de l'effluent}$$

Le rendement en essence (27-150) (ci dessous Rdt Ess) est égal au % poids de composés ayant un point d'ébullition compris entre 27 et 150 °C dans les effluents. Le rendement en carburéacteur (kérosène, 150-250) (ci dessous Rdt Kéro) est égal au % poids de composés ayant un point d'ébullition compris entre 150 et 250°C dans les effluents. Le rendement en gazole (250-380) est égal au % poids de composés ayant un point d'ébullition compris entre 250 et 380°C dans les effluents.

La température de réaction est fixée de façon à atteindre une conversion brute CB égale à 70% poids. Dans le tableau 5 suivant, nous avons reporté la température de réaction et la sélectivité brute pour les catalyseurs décrits dans le tableau 2.

Le tableau 5 met en évidence que l'utilisation d'un catalyseur selon l'invention contenant de la zéolithe NU-88 et du niobium, conduit à des niveaux de conversion plus élevées (c'est à dire des températures de conversion plus basses pour une conversion donnée de 70% poids) par rapport aux catalyseurs non conformes ne contenant pas de niobium. Par ailleurs, l'ensemble des catalyseurs contenant une zéolithe NU-88 et du niobium selon l'invention conduit à des rendements en essence améliorés par rapport à ceux enregistrés dans le cas des catalyseurs de l'art antérieur ne contenant pas de niobium.

Tableau 5

| Activités catalytiques des catalyseurs en hydrocraquage haute conversion (70%) | | | | |
|---|---|---|---|---|
| | | T(°C) | Rdt Essence (%pds) | Rdt Kérosène (%pds) |
| CZ10 | NiMo/NU-88 | 373 | 37,4 | 12,0 |
| CZ10Nb | NiMoNb/NU-88 | 371 | 38,2 | 11,4 |
| CZ10P | NiMoP/NU-88 | 373 | 37,4 | 12,9 |
| CZ10NbP | NiMoNbP/NU-88 | 371 | 38,4 | 12,2 |
| CZ10PBSi | NiMoPBSi/NU-88 | 370 | 36,6 | 12,9 |
| CZ10NbPBSi | NiMoNbPBSi/NU-88 | 368 | 37,9 | 12,4 |

## Revendications

**1.** Catalyseur comprenant au moins une matrice, au moins du niobium, et au moins une zéolithe NU-88 définie par :

-i) une composition chimique exprimée sur une base anhydre, en termes de rapports molaires d'oxydes, par la formule :

$$100\ XO_2,\ m\ Y_2O_3,\ p\ R_{2/n}O,$$

où m est égal ou inférieur à 10,
p est égal ou inférieur à 20,
R représente un ou plusieurs cations de valence n,
X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et

-ii) le fait qu'elle présente, sous forme brute de synthèse, un diagramme de diffraction X comportant les résultats présentés dans le tableau 1 suivant :

Tableau 1 :

| Tableau de diffraction des rayons X de la zéolithe NU-88 (brute de synthèse) | |
|---|---|
| $d_{hkl}$ ($10^{-10}$m) | $I/I_{max}$ |
| 12,1±0,35<br>11,0±0,30 | F ou TF (1)<br>F (1) |
| 9,88±0,25<br>6,17±0,15 | m (1)<br>f |
| 3,97±0,09<br>3,90±0,08 | TF (2)<br>TF (2) |
| 3,80±0,08<br>3,66±0,07 | f (2)<br>tf |
| 3,52±0,07<br>3,27±0,07 | tf<br>tf |
| 3,09±0,06<br>2,91±0,06 | f<br>f |
| 2,68±0,06<br>2,49±0,05 | tf<br>tf |
| 2,20±0,05<br>2,059±0,05 | tf<br>f |
| 1,729±0,04 | tf |

(1) Ces pics ne sont pas résolus et font partie d'un même massif.

(2) Ces pics ne sont pas résolus et font partie du même massif.

**2.** Catalyseur selon la revendication 1 dans lequel la zéolithe présente une composition chimique telle que m est compris entre 0,1 et 10.

**3.** Catalyseur comprenant au moins une matrice, au moins du niobium, et au moins une zéolithe NU-88 définie par :

i) une composition chimique suivante exprimée sur une base anhydre, en termes de rapports molaires d'oxydes, par la formule :

$100XO_2$ : inférieur ou égal à 10 $Y_2O_3$ : inférieur ou égal à 10 $M_2O$,
où
X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et
M est au moins un cation de métal alcalin (groupe IA de la Classification Périodique des Eléments) et/ou l'ammonium et/ou l'hydrogène,

ii) le fait qu'elle présente, sous forme hydrogène, un diagramme de diffraction X comportant les résultats présentés dans le tableau 2 suivant :

Tableau 2 :

| Tableau de diffraction des rayons X de la zéolithe NU-88 (forme hydrogène) | |
|---|---|
| $d_{hkl}$ ($10^{-10}$m) | $I/I_{max}$ |
| 12,1±0,35 | TF(1) |

(1) Ces pics ne sont pas résolus et font partie d'un même massif.

Tableau 2 : (suite)

| Tableau de diffraction des rayons X de la zéolithe NU-88 (forme hydrogène) | |
|---|---|
| $d_{hkl}$ ($10^{-10}$m) | $I/I_{max}$ |
| 11,0±0,30 | F ou TF (1) |
| 9,92±0,25<br>8,83±0,20 | f ou m (1)<br>tf |
| 6,17±0,15<br>3,99±0,10 | f<br>F ou TF (2) |
| 3,91±0,08<br>3,79±0,08 | TF (2)<br>f ou m (2) |
| 3,67±0,07<br>3,52±0,07 | tf<br>tf |
| 3,09±0,06<br>2,90±0,06 | f<br>f |
| 2,48±0,05<br>2,065±0,05 | f<br>f |
| 1,885±0,04<br>1,733±0,04 | tf<br>tf |

(1) Ces pics ne sont pas résolus et font partie d'un même massif.
(2) Ces pics ne sont pas résolus et font partie du même massif.

**4.** Catalyseur selon l'une des revendications 1 et 2 dans lequel la zéolithe a la composition chimique suivante, exprimée sur une base anhydre et en termes de rapports molaires d'oxydes :

100 $XO_2$ : inférieur ou égal à 10 $Y_2O_3$ : inférieur ou égal à 10 Q : inférieur ou égal à 10 $M_2O$,

où X est le silicium et/ou le germanium,

Y est choisi dans le groupe formé par les éléments suivants : l'aluminium, le fer, le gallium, le bore, le titane, le vanadium, le zirconium, le molybdène, l'arsenic, l'antimoine, le chrome et le manganèse,

M est au moins un cation de métal alcalin (groupe IA de la Classification Périodique des Eléments) et/ou l'ammonium, et

Q est au moins un cation organique azoté ou un précurseur de cation organique azoté ou un produit de décomposition de cation organique azoté.

**5.** Catalyseur selon l'une des revendications 1 à 4 dans lequel X est le silicium et Y est l'aluminium.

**6.** Catalyseur selon l'une des revendications 1, 2, 4 ou 5 dans lequel la zéolithe est au moins en partie sous forme H+ ou NH4+ ou métallique, ledit métal étant choisi dans le groupe formé par les groupes IA, IB, IIA, IIB, IIIA, IIIB (y compris les terres rares), VIII, Sn, Pb et Si.

**7.** Catalyseur selon l'une des revendication 1 à 6 comprenant en outre au moins un élément promoteur choisi dans le groupe formé par le bore, le silicium, et le phosphore.

**8.** Catalyseur selon l'une des revendication 1 à 7 comprenant en outre au moins un élément choisi dans le groupe VIB.

**9.** Catalyseur selon la revendication 8 dans lequel l'élément du groupe VIB est le molybdène ou le tungstène.

**10.** Catalyseur selon l'une des revendication 1 à 9 comprenant en outre au moins un élément promoteur choisi dans le groupe VIII.

**11.** Catalyseur selon la revendication 10, dans lequel l'élément du groupe VIII est le fer, le cobalt ou le nickel.

**12.** Catalyseur selon l'une des revendication 1 à 11 comprenant en outre au moins un élément choisi dans le groupe VIIA.

**13.** Catalyseur selon la revendication 12 dans lequel l'élément du groupe VIIA est le fluor.

**14.** Catalyseur selon l'une des revendications 1 à 13 renfermant en % poids par rapport à la masse totale du catalyseur :

- 0,1 à 99,8% d'une zéolithe NU-88,
- 0,1 à 60% de nobium,
- 0,1 à 99% d'une matrice minérale poreuse amorphe ou mal cristallisée de type oxyde
- 0 à 60% d'au moins un métal choisi parmi les éléments du groupe VIII et du groupe VIB,
- 0 à 20% d'au moins un élément promoteur choisi dans le groupe constitué par le silicium, le bore et le phosphore, non compris le silicium contenu dans la charpente de la zéolithe
- 0 à 20% d'au moins un élément choisi dans le groupe VIIA.

**15.** Utilisation du catalyseur selon l'une des revendications 1 à 14 dans un procédé d'hydrocraquage de charges hydrocarbonnées.

**16.** Utilisation selon la revendication 15 telle que la charge est constituée d'au moins 80% en volume de composés dont les points d'ébullition sont d'au moins 350°C.

**17.** Utilisation selon l'une des revendications 15 ou 16 dans laquelle la température est supérieure à 200°C, la pression supérieure à 0,1 MPa, la quantité d'hydrogène au minimum de 50 litre d'hydrogène par litre de charge, et la vitesse volumétrique horaire comprise entre 0,1 et 20 volume de charge par volume de catalyseur et par heure.

**18.** Utilisation selon l'une des revendications 15 ou 16 dans un procédé d'hydrocraquage doux dans laquelle le niveau de conversion est inférieur à 55%, la température est supérieure à 230°C, la pression supérieure à 2 MPa et inférieure à 12MPa, la quantité d'hydrogène au minimum de 100 litre d'hydrogène par litre de charge, et la vitesse volumétrique horaire comprise entre 0,15 et 10 volume de charge par volume de catalyseur et par heure.

**19.** Utilisation selon l'une des revendications 15 ou 16 dans un procédé d'hydrocraquage, dans laquelle la conversion est supérieure à 55%, la température est supérieure à 230°C, la pression supérieure à 5 MPa, la quantité d'hydrogène au minimum de 100 litre d'hydrogène par litre de charge, et la vitesse volumétrique horaire comprise entre 0,15 et 10 volume de charge par volume de catalyseur et par heure.

**20.** Utilisation selon l'une des revendications 15 à 19 dans laquelle une étape d'hydrotraitement est effectuée préalablement à l'étape d'hydrocraquage.

**21.** Utilisation selon la revendication 20 dans laquelle l'étape d'hydrotraitement est effectuée à une température comprise entre 350°C et 460°C, une pression d'au moins 2 MPa, avec une quantité d'hydrogène d'au moins 100 litre d'hydrogène par litre de charge, et une vitesse volumétrique horaire comprise entre 0,1 et 5 volume de charge par volume de catalyseur et par heure.

## Claims

**1.** A catalyst comprising at least one matrix, at least niobium, and at least one NU-88 zeolite defined as follows:

i) a chemical composition with the following formula, expressed in terms of the mole ratios of the oxides for the anhydrous state:

$$100XO_2,\ mY_2O_3,\ pR_{2/n}O$$

where

m is 10 or less;
p is 20 or less;
R represents one or more cations with valency n;
X represents silicon and/or germanium;
Y is selected from the group formed by the following elements: aluminium, iron, gallium, boron, titanium, vanadium, zirconium, molybdenum, arsenic, antimony, chromium and manganese; and

ii) an X ray diffraction diagram, in its as synthesised state, which comprises the results shown in Table 1:

TABLE 1:

| X ray diffraction diagram for NU-88 zeolite (as synthesised state) | |
|---|---|
| $d_{hkl}$ ($10^{-10}$ m) | $I/I_{max}$ |
| 12.1±0.35<br>11.0±0.30 | s or vs (1)<br>s (1) |
| 9.88±0.25<br>6.17±0.15 | m (1)<br>w |
| 3.97±0.09<br>3.90±0.08 | vs (2)<br>vs (2) |
| 3.80±0.08<br>3.66±0.07 | w (2)<br>vw |
| 3.52±0.07<br>3.27±0.07 | vw<br>vw |
| 3.09±0.06<br>2.91±0.06 | w<br>w |
| 2.68±0.06<br>2.49±0.05 | vw<br>vw |
| 2.20±0.05<br>2.059±0.05 | vw<br>w |
| 1.729±0.04 | vw |

(1) these peaks were not resolved and formed part of a feature;
(2) these peaks were not resolved and formed part of the same feature.

**2.** A catalyst according to claim 1, in which the value m for the zeolite is in the range 0.1 to 10.

**3.** A catalyst comprising at least one matrix, at least niobium, and at least one NU-88 zeolite defined as follows:

i) a chemical composition with the following formula, expressed in terms of the mole ratios of the oxides for the anhydrous state:

$100XO_2$, 10 or less $Y_2O_3$, 10 or less $M_2O$;
where
X represents silicon and/or germanium;
Y is selected from the group formed by the following elements: aluminium, iron, gallium, boron, titanium, vanadium, zirconium, molybdenum, arsenic, antimony, chromium and manganese; and
M is at least one cation of an alkali metal (group IA of the periodic table) and/or ammonium and/or hydrogen;

ii) an X ray diffraction diagram, in its hydrogen form, which comprises the results shown in Table 2:

TABLE 2:

| X ray diffraction diagram for NU-88 zeolite (hydrogen form) | |
|---|---|
| $d_{hkl}$ ($10^{-10}$ m) | $I/I_{max}$ |
| 12.1±0.35<br>11.0±0.30 | vs (1)<br>s or vs (1) |
| 9.92±0.25<br>8.83±0.20 | w or m (1)<br>vw |
| 6.17±0.15<br>3.99±0.10 | w<br>s or vs (2) |
| 3.91±0.08<br>3.79±0.08 | vs (2)<br>w or m (2) |
| 3.67±0.07<br>3.52±0.07 | vw<br>vw |
| 3.09±0.06<br>2.90±0.06 | w<br>w |
| 2.48±0.05<br>2.065±0.05 | w<br>w |
| 1.885±0.04<br>1.733±0.04 | vw<br>vw |

(1) these peaks were not resolved and formed part of a feature;
(2) these peaks were not resolved and formed part of the same feature.

**4.** A catalyst according to claim 1 or claim 2, in which the zeolite has the following chemical composition, expressed in terms of the mole ratios of the oxides for the anhydrous state:

$100XO_2$, 10 or less $Y_2O_3$, 10 or less Q, 10 or less $M_2O$;
where
X represents silicon and/or germanium;
Y is selected from the group formed by the following elements: aluminium, iron, gallium, boron, titanium, vanadium, zirconium, molybdenum, arsenic, antimony, chromium and manganese;
M is at least one cation of an alkali metal (group IA of the periodic table) and/or ammonium; and
Q is at least one nitrogen-containing organic cation or a precursor of a nitrogen-containing organic cation or a decomposition product of a nitrogen-containing organic cation.

**5.** A catalyst according to any one of claims 1 to 4, in which X is silicon and Y is aluminium.

**6.** A catalyst according to any one of claims 1, 2, 4 or 5, in which the zeolite is at least partially in the H+ or NH4+ form or metal form, said metal being selected from the group formed by groups IA, IB, IIA, IIB, IIIA, IIIB (including the rare earths), VIII, Sn, Pb and Si.

**7.** A catalyst according to any one of claims 1 to 6, further containing at least one promoter element selected from the group formed by boron, silicon and phosphorous.

**8.** A catalyst according to any one of claims 1 to 7, further comprising at least one element selected from group VIB.

**9.** A catalyst according to claim 8, in which the group VIB element is molybdenum or tungsten.

**10.** A catalyst according to any one of claims 1 to 9, further comprising at least one promoter element selected from group VIII.

**11.** A catalyst according to claim 10, in which the group VIII element is iron, cobalt or nickel.

**12.** A catalyst according to any one of claims 1 to 11, further comprising at least one element selected from group VIIA.

**13.** A catalyst according to claim 12, in which the group VIIA element is fluorine.

**14.** A catalyst according to any one of claims 1 to 13, comprising, in weight % with respect to the total catalyst mass:

- 0.1% to 99.8% of a NU-88 zeolite;
- 0.1% to 60% of niobium;
- 0.1% to 99% of an amorphous or low crystallinity oxide type porous mineral matrix;
- 0 to 60% of at least one metal selected from elements from group VIII and group VIB;
- 0 to 20% of at least one promoter element selected from the group formed by silicon, boron and phosphorous, not including the silicon contained in the zeolite framework;
- 0 to 20% of at least one element selected from group VIIA.

**15.** Use of a catalyst according to any one of claims 1 to 14, in a process for hydrocracking hydrocarbon-containing feeds.

**16.** Use according to claim 15, in which the feed is constituted by at least 80% by volume of compounds with a boiling point of at least 350°C.

**17.** Use according to claim 15 or claim 16, in which the temperature is over 200°C, the pressure is over 0.1 MPa, the quantity of hydrogen is a minimum or 50 litres of hydrogen per litre of feed, and the hourly space velocity is in the range 0.1 to 20 volumes of feed per volume of catalyst per hour.

**18.** Use according to claim 15 or claim 16, in a mild hydrocracking process in which the degree of conversion is less than 55%, the temperature is over 230°C, the pressure is over 2 MPa and less than 12 MPa, the quantity of hydrogen is a minimum of 100 litres of hydrogen per litre of feed, and the hourly space velocity is in the range 0.15 to 10 volumes of feed per volume of catalyst per hour.

**19.** Use according to claim 15 or claim 16, in a mild hydrocracking process in which the degree of conversion is over 55%, the temperature is over 230°C, the pressure is over 5 MPa, the quantity of hydrogen is a minimum of 100 litres of hydrogen per litre of feed, and the hourly space velocity is in the range 0.15 to 10 volumes of feed per volume of catalyst per hour.

**20.** Use according to any one of claims 15 to 19, in which a hydrotreatment step is carried out prior to the hydrocracking step.

**21.** Use according to claim 20, in which the hydrotreatment step is carried out at a temperature in the range 350°C to 460°C, a pressure of at least 2 MPa, with a quantity of hydrogen of at least 100 litres of hydrogen per litre of feed, and an hourly space velocity in the range 0.1 to 5 volumes of feed per volume of catalyst per hour.

**Patentansprüche**

**1.** Katalysator, der mindestens eine Matrix, mindestens Niob und mindestens einen Zeolithen NU-88, der wie nachstehend definiert ist, umfasst:

i) mit einer chemischen Zusammensetzung, bezogen auf eine wasserfreie Basis, ausgedrückt durch die Oxid-Molverhältnisse, der Formel

$$100\ XO_2,\ m\ Y_2O_3,\ p\ R_{2/n}O,$$

worin

m ≤ 10,
p ≤ 20,
R steht für ein oder mehrere Kationen mit der Valenz n,

X steht für Silicium und/oder Germanium,
Y ausgewählt ist aus der Gruppe der folgenden Elemente: Aluminium, Eisen, Gallium, Bor, Titan, Vanadin, Zirkonium, Molybdän, Arsen, Antimon, Chrom und Mangan, und

ii) der in Form eines Syntheserohprodukts ein Röntgenbeugungsdiagramm mit den in der folgenden Tabelle 1 angegebenen Werten hat:

Tabelle 1:

| Röntgenbeugungsdiagramm des Zeoliths NU-88 (Syntheserohprodukt) | |
|---|---|
| $d_{hkl}$ ($10^{-10}$m) | $I/I_{max}$ |
| 12,1 ± 0,35<br>11,0 ± 0,30 | F oder TF (1)<br>F (1) |
| 9,88 ± 0,25<br>6,17 ± 0,15 | m (1)<br>f |
| 3,97 ± 0,09<br>3,90 ± 0,08 | TF (2)<br>TF (2) |
| 3,80 ± 0,08<br>3,66 ± 0,07 | f (2)<br>tf |
| 3,52 ± 0,07<br>3,27 ± 0,07 | tf<br>tf |
| 3,09 ± 0,06<br>2,91 ± 0,06 | f<br>f |
| 2,68 ± 0,06<br>2,49 ± 0,05 | tf<br>tf |
| 2,20 ± 0,05<br>2,059 ± 0,05 | tf<br>f |
| 1,729 ± 0,04 | tf |

(1) diese Peaks sind nicht aufgelöst und Teil des gleichen Massivs (Bande)
(2) diese Peaks sind nicht aufgelöst und Teil des gleichen Massivs (Bande)

**2.** Katalysator nach Anspruch 1, in dem der Zeolith eine chemische Zusammensetzung aufweist, bei der m zwischen 0,1 und 10 liegt.

**3.** Katalysator, der mindestens eine Matrix, mindestens Niob und mindestens einen Zeolithen NU-88, der wie nachstehend angegeben definiert ist, umfasst:

i) mit der nachstehend angegebenen chemischen Zusammensetzung, bezogen auf eine wasserfreie Basis, ausgedrückt durch die Oxid-Molverhältnisse, der Formel:

$$100XO_2: \leq 10\ Y_2O_3: \leq 10\ M_2O$$

worin

X steht für Silicium und/oder Germanium,
Y ausgewählt ist aus der Gruppe der folgenden Elemente: Aluminium, Eisen, Gallium, Bor, Titan, Vanadin, Zirkonium, Molybdän, Arsen, Antimon, Chrom und Mangan, und
M steht für mindestens ein Alkalimetall-Kation (Gruppe IA des Periodischen Systems der Elemente) und/oder Ammonium und/oder Wasserstoff, und

ii) der in der Wasserstoffform ein Röntgenbeugungsdiagramm mit den in der folgenden Tabelle 2 angegebenen

Werten hat:

Tabelle 2:

| Röntgenbeugungsdiagramm des Zeoliths NU-88 (Wasserstoffform) | |
|---|---|
| $d_{hkl}$ ($10^{-10}$m) | $I/I_{max}$ |
| 12,1 ± 0,35<br>11,0 ± 0,30 | TF (1)<br>F oder TF (1) |
| 9,92 ± 0,25<br>8,83 ± 0,20 | f oder m (1)<br>tf |
| 6,17 ± 0,15<br>3,99 ± 0,10 | f<br>F oder TF (2) |
| 3,91 ± 0,08<br>3,79 ± 0,08 | TF (2)<br>f oder m (2) |
| 3,67 ± 0,07<br>3,52 ± 0,07 | tf<br>tf |
| 3,09 ± 0,06<br>2,90 ± 0,06 | f<br>f |
| 2,48 ± 0,05<br>2,065 ± 0,05 | f<br>f |
| 1,885 ± 0,04<br>1,733 ± 0,04 | tf<br>tf |

(1) diese Peaks sind nicht aufgelöst und Teil des gleichen Massivs (Bande)
(2) diese Peaks sind nicht aufgelöst und Teil des gleichen Massivs (Bande)

**4.** Katalysator nach einem der Ansprüche 1 und 2, wobei der Zeolith die nachstehend angegebene chemische Zusammensetzung hat, bezogen auf eine wasserfreie Basis und ausgedrückt durch die Oxid-Molverhältnisse:

$$100\ XO_2 : \leq 10\ Y_2O_3 : \leq 10\ Q : \leq 10\ M_2O$$

worin:

X steht für Silicium und/oder Germanium,
Y ausgewählt ist aus der Gruppe der folgenden Elemente: Aluminium, Ei - sen, Gallium, Bor, Titan, Vanadin, Zirkonium, Molybdän, Arsen, Antimon, Chrom und Mangan,
M steht für mindestens ein Alkalimetallkation (Gruppe IA des Periodischen Systems der Elemente) und/oder Ammoniak und
Q steht für mindestens ein organisches Stickstoff-haltiges Kation oder einen Vorläufer eines organischen Stickstoff-haltigen Kations oder ein Zersetzungsprodukt eines organischen Stickstoff-haltigen Kations.

**5.** Katalysator nach einem der Ansprüche 1 bis 4, in dem X steht für Silicium und Y steht für Aluminium.

**6.** Katalysator nach einem der Ansprüche 1, 2, 4 oder 5, in dem der Zeolith mindestens zum Teil in der $H^+$-Form oder $NH_4^+$-Form oder in der metallischen Form vorliegt, wobei das genannte Metall ausgewählt ist aus der Gruppe, die gebildet wird durch die Gruppen IA, IB, IIA, IIB, IIIA, IIIB (einschließlich der Seltenen Erden), VIII des Periodischen Systems der Elemente, Sn, Pb und Si.

**7.** Katalysator nach einem der Ansprüche 1 bis 6, der außerdem mindestens ein Promotorelement, ausgewählt aus der Gruppe, die besteht aus Bor, Silicium und Phosphor, umfasst.

**8.** Katalysator nach einem der Ansprüche 1 bis 7, der außerdem mindestens ein Element aus der Gruppe VIB umfasst.

9. Katalysator nach Anspruch 8, in dem das Element der Gruppe VIB Molybdän oder Wolfram ist.

10. Katalysator nach einem der Ansprüche 1 bis 9, der außerdem mindestens ein Promotor-Element, ausgewählt aus der Gruppe VIII, umfasst.

11. Katalysator nach Anspruch 10, in dem das Element der Gruppe VIII Eisen, Kobalt oder Nickel ist.

12. Katalysator nach einem der Ansprüche 1 bis 11, der außerdem mindestens ein Element, ausgewählt aus der Gruppe VIIA, umfasst.

13. Katalysator nach Anspruch 12, in dem das Element der Gruppe VIIA Fluor ist.

14. Katalysator nach einem der Ansprüche 1 bis 13, der in Gew.-%, bezogen auf die Gesamtmasse des Katalysators, enthält:

- 0,1 bis 99,8 % des Zeoliths NU-88,
- 0,1 bis 60 % Niob
- 0,1 bis 99 % einer amorphen porösen Mineral-Matrix oder einer schlecht kristallisierten Mineral-Matrix vom Oxid-Typ,
- 0 bis 60 % mindestens eines Metalls, ausgewählt aus den Elementen der Gruppe VIII und der Gruppe VIB,
- 0 bis 20 % mindestens eines Promotor-Elements, ausgewählt aus der Gruppe, die besteht Silicium, Bor und Phosphor, ausgenommen das Silicium, das im Zeolith-Grundgerüst enthalten ist,
- 0 bis 20 % mindestens eines Elements, ausgewählt aus der Gruppe VIIA.

15. Verwendung des Katalysators nach einem der Ansprüche 1 bis 14 in einem Verfahren zur Hydrocrackung von Kohlenwasserstoff-Beschickungen.

16. Verwendung nach Anspruch 15, wobei die Beschickung besteht zu mindestens 80 Vol.-% aus Verbindungen, deren Siedepunkte mindestens 350°C betragen.

17. Verwendung nach einem der Ansprüche 15 oder 16, wobei die Temperatur über 200°C liegt, der Druck über 0,1 MPa liegt, die Wasserstoffmenge mindestens 50 l Wasserstoff pro l Beschickung beträgt und die stündliche Raumgeschwindigkeit zwischen 0,1 und 20 Volumenteilen Beschickung pro Volumenteil Katalysator pro Stunde liegt.

18. Verwendung nach einem der Ansprüche 15 oder 16 in einem Verfahren zur süßen (schwefelfreien) Hydrocrackung, wobei der Umwandlungsgrad unter 55 % liegt, die Temperatur über 230°C liegt, der Druck über 2 MPa und unter 12 MPa liegt, die Wasserstoffmenge mindestens 100 l Wasserstoff pro Liter Beschickung beträgt und die stündliche Raumgeschwindigkeit zwischen 0,15 und 10 Volumenteilen Beschickung pro Volumenteil Katalysator pro Stunde liegt.

19. Verwendung nach einem der Ansprüche 15 oder 16 in einem Verfahren zur Hydrocrackung, wobei die Umwandlung unter 55 % liegt, die Temperatur über 230°C liegt, der Druck über 5 MPa liegt, die Wasserstoffmenge mindestens 100 l Wasserstoff pro l Beschickung beträgt und die stündliche Raumgeschwindigkeit zwischen 0,15 und 10 Volumenteilen Beschickung pro Volumenteil Katalysator pro Stunde liegt.

20. Verwendung nach einem der Ansprüche 15 bis 19, wobei vor der Hydrocrackungsstufe eine Hydrotreating-Stufe durchgeführt wird.

21. Verwendung nach Anspruch 20, wobei die Hydrotreating-Stufe bei einer Temperatur zwischen 350 und 460°C, bei einem Druck von mindestens 2 MPa, mit einer Wasserstoffmenge von mindestens 100 l Wasserstoff pro l Beschikkung und bei einer stündlichen Raumgeschwindigkeit zwischen 0,1 und 5 Volumenteilen Beschickung pro Volumenteil Katalysator pro Stunde durchgeführt wird.

FIG.1

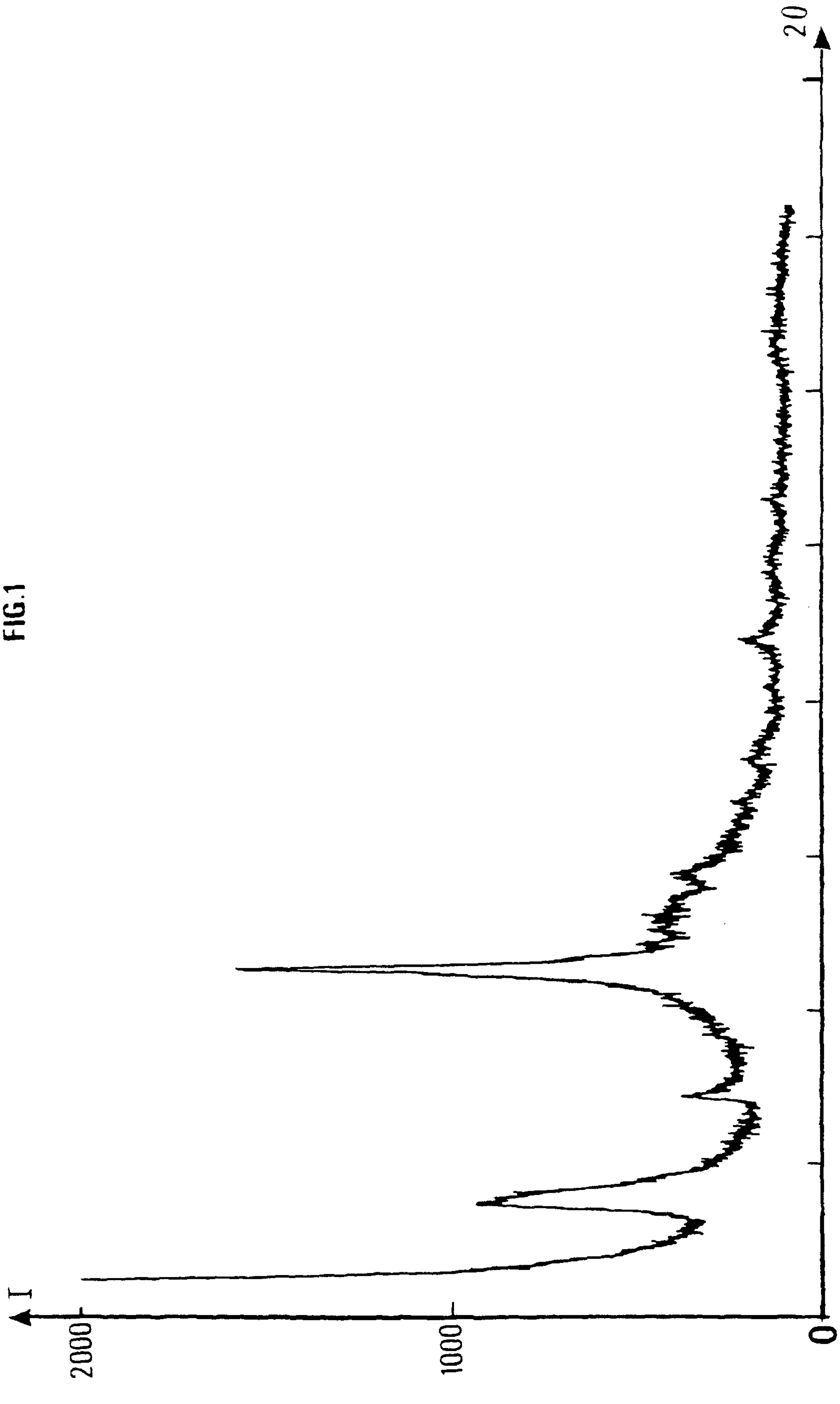

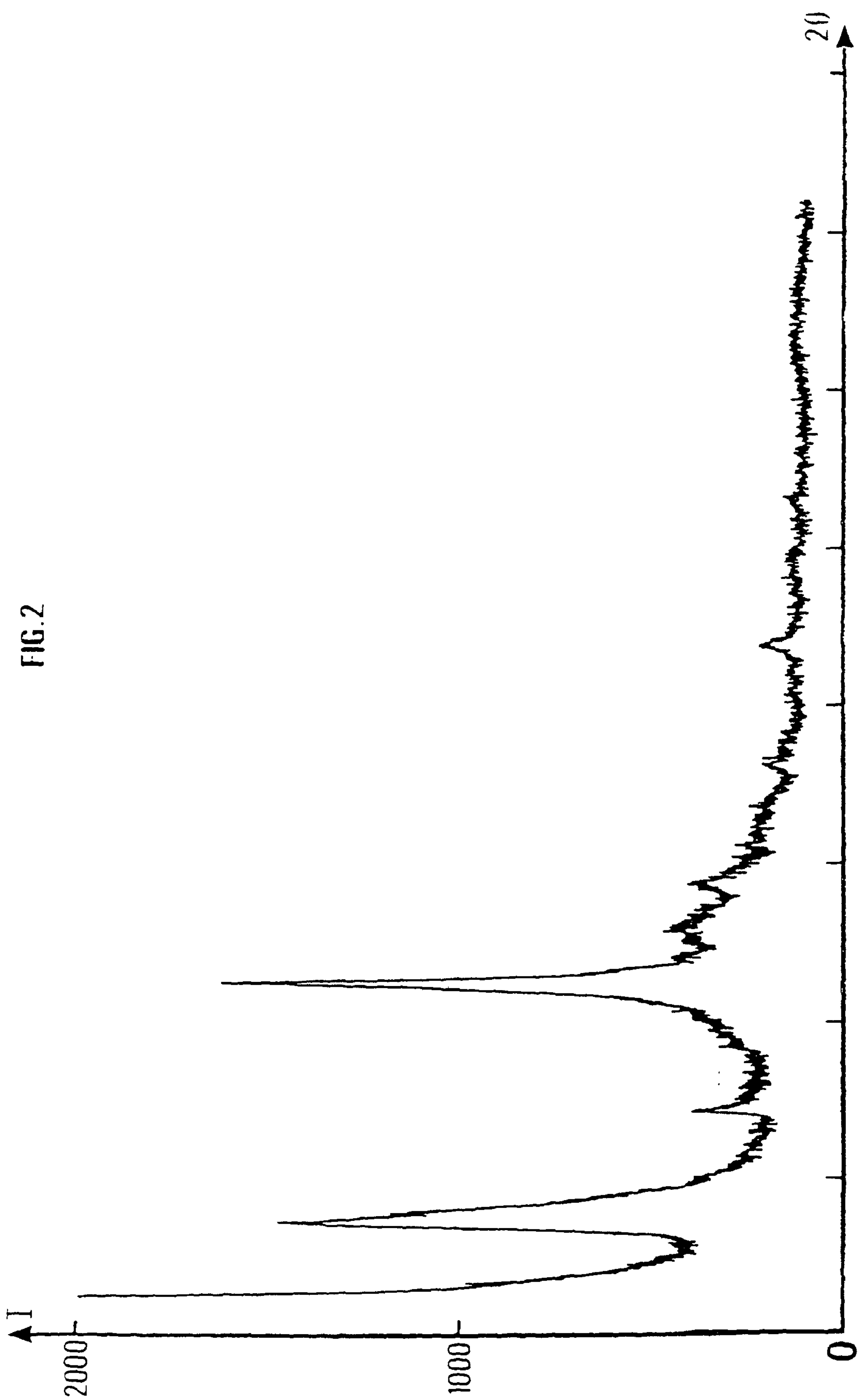


FIG. 2